Europäisches Patentamt

European Patent Office

Office européen des brevets

(19)

(11) Veröffentlichungsnummer: **0 111 193**
**A1**

(12) # EUROPÄISCHE PATENTANMELDUNG

(21) Anmeldenummer: **83111581.1**

(22) Anmeldetag: **19.11.83**

(51) Int. Cl.³: **H 02 K 1/26**
**H 02 K 23/04**

(30) Priorität: **15.12.82 DE 3246356**

(43) Veröffentlichungstag der Anmeldung:
**20.06.84 Patentblatt 84/25**

(84) Benannte Vertragsstaaten:
**DE FR GB IT**

(71) Anmelder: **International Standard Electric Corporation**
**320 Park Avenue**
**New York New York 10022(US)**

(84) Benannte Vertragsstaaten:
**FR GB IT**

(71) Anmelder: **Standard Elektrik Lorenz Aktiengesellschaft**
**Hellmuth-Hirth-Strasse 42**
**D-7000 Stuttgart 40(DE)**

(84) Benannte Vertragsstaaten:
**DE**

(72) Erfinder: **Pfendler, Klaus**
**Im Tännle 9**
**D-7823 Bonndorf(DE)**

(74) Vertreter: **Pohl, Heribert, Dipl.-Ing et al,**
**Standard Elektrik Lorenz AG Patent- und Lizenzwesen**
**Kurze Strasse 8 Postfach 300 929**
**D-7000 Stuttgart 30(DE)**

(54) **Rastkraftarmer Elektromotor.**

(57) Bei einem Gleichstrommotor mit einem aus Permanentmagneten bestehenden Ständer und aus einem Blechpaket bestehenden Läufer ist die der Rastung des Läufers überlagerte Schwebung dadurch nahezu völlig vermieden, daß die Vorzugsrichtung der Blechschnitte im Blechpaket in verschiedene Richtungen weist.

Fig. 3

K. Pfendler-2

EP 0 111 193 A1

K.Pfendler-2

Rastkraftarmer Elektromotor

Die Erfindung betrifft einen Elektromotor mit einem Ständer und einem aus Blechschnitten geschichteten Blechpaket bestehenden Läufer, bei dem die Blechschnitte aus einem gewalzten Blech ausgeschnitten sind und eine durch das Walzen entstandene Vorzugsrichtung aufweisen.

Gleichstrommotoren mit einem permanentmagnetischen Ständer und einem geblechten Läufer weisen Rastkräfte auf. Wenn man bei einem solchen Motor den Läufer von Hand zu drehen versucht, dann kann man feststellen, daß die Drehung nicht gleichmäßig sondern stufenförmig verläuft, gerade so, als ob der Läufer eine Mehrzahl von Schritten ausführen würde. Es handelt sich dabei um Rastkräfte. Die Anzahl der Rastungen je Läuferumdrehung entspricht der Anzahl der Nutenzahl des Läufers, d.h. also der Nutteilung.

Beim Betrieb des Motors ist den Rastkräften eine Schwebung überlagert, welche bei zweipoligen Motoren je Läuferumdrehung je zwei Minima und Maxima aufweist.

Eine solche den Rastkräften überlagerte Schwebung ist nach-

ZT/P2-Bö/Gn
13.12.1982

- 3 -

K.Pfendler-2

teilig und daher unerwünscht, weil das vom Motor abgegebene
Drehmoment pro Umdrehung zweimal zwischen einem Maximum
und einem Minimum pendelt.

Die der Erfindung zugrundeliegende Aufgabe besteht deshalb
darin, einen Gleichstrommotor der eingangs beschriebenen
Art zu schaffen, bei dem die Schwebung der Rastkräfte völlig
vermieden oder zumindest sehr stark vermindert ist.

Diese Aufgabe ist erfindungsgemäß dadurch gelöst, daß die
Vorzugsrichtung der Blechschnitte im Blechpaket in verschiedene Richtungen weist.

Die Ansprüche 2 bis 4 enthalten vorteilhafte Ausgestaltungen der Erfindung, welche nachstehend anhand der Figuren
1 bis 4 erläutert ist. Es zeigen:

Fig. 1   den Querschnitt eines permanent erregten Gleich-
         strommotors, dessen Läufer einen geblechten Eisen-
         kern besitzt,

Fig. 2   ein Diagramm, in dem das Rastmoment eines bekannten
         Motors aufgezeichnet ist,

Fig. 3   ein Diagramm, in dem das Rastmoment eines Motors
         mit den erfindungsgemäßen Merkmalen aufgezeichnet
         ist.

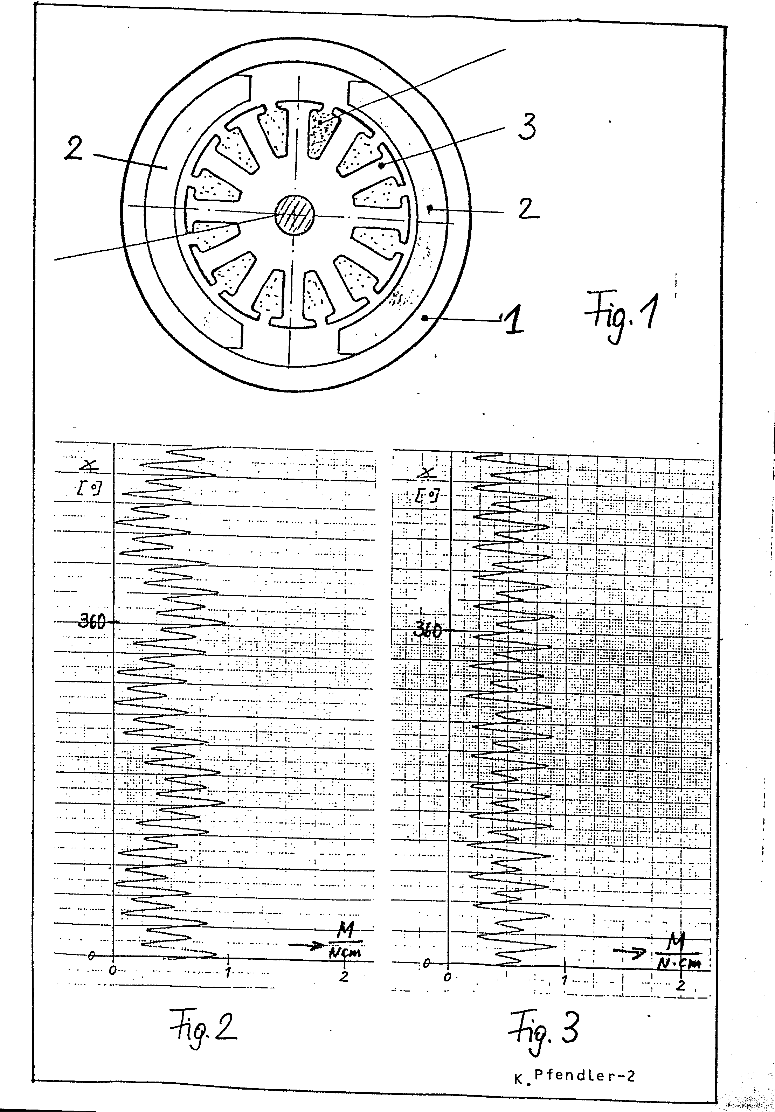

Der Gleichstrommotor gemäß Fig. 1 besitzt zwei in dem Gehäuse 1 angeordnete Permanentmagnete 2, welche den Ständer des
Motors bilden. Im Ständer ist zentrisch der Läufer 3 angeordnet, der im gezeigten Beispiel zwölf Nuten aufweist,
in denen die Läuferwicklung angeordnet ist.

K.Pfendler-2

Um zu den Diagrammen gemäß Fig. 2 und 3 zu gelangen, ist in einem permanent erregten Ständer, etwa wie aus Fig. 1 ersichtlich, ein geblechter Läufer, jedoch ohne Wicklung und ohne Bürsten angeordnet worden, der von einem Synchronmotor derart angetrieben wird, daß er etwa eine Umdrehung in 15 Sekunden ausführt. Dabei wurde dann jeweils das dafür aufzuwendende Drehmoment aufgezeichnet.

Das Diagramm gemäß Fig. 2 wurde aufgenommen mit dem Läufer eines handelsüblichen Motors, der zwölf Nuten für die Wicklung aufweist und bei dem die Blechschnitte im Blechpaket des Läufers derart angeordnet waren, daß ·die durch das Walzen entstandene Vorzugsrichtung sämtlicher Blechschnitte des Blechpakets in die gleiche Richtung weist.

Aus dem Diagramm gemäß Fig. 2 ist ersichtlich, daß das bei der Umdrehung des Läufers vom Drehwinkel $0^{\circ}$ bis $360^{\circ}$ ein Moment benötigt wird, das zwei Maxima und zwei Minima aufweist, welche die der Rastkraft überlagerte Schwebung darstellen. Den zwölf Rastungen auf einer Umdrehung des Läufers ist eine Schwebung überlagert, welche zwei Maxima und zwei Minima aufweist.

Das Diagramm gemäß Fig. 3 ist mit einem anderen Läufer aufgenommen worden, dessen Blechpaket derart aufgebaut war, daß jeder Blechschnitt des Blechpaketes um eine Nutteilung (im vorliegenden Fall also um $30^{\circ}$) gegenüber dem nächsten Blechschnitt in Umfangsrichtung verdreht war.

Es ist aus dem Diagramm ersichtlich, daß dieser Motor praktisch keine Schwebung mehr aufweist.

K.Pfendler-2

## Ansprüche

1. Elektromotor mit einem Ständer und einem aus Blech-schnitten geschichteten Blechpaket bestehenden Läufer, bei dem die Blechschnitte aus einem gewalzten Blech ausgeschnit-ten sind und eine durch das Walzen entstandene Vorzugsrich-tung aufweisen, d a d u r c h  g e k e n n z e i c h n e t, daß die Vorzugsrichtung der Blechschnitte im Blechpaket in verschiedene Richtungen weist.

2. Elektromotor nach Anspruch 1, dadurch gekennzeichnet, daß jeder Blechschnitt gegenüber dem nächsten in Umfangs-richtung um einen bestimmten Winkel verdreht im Blechpaket angeordnet ist.

3. Elektromotor nach Anspruch 1, dadurch gekennzeichnet, daß die Blechschnitte in der Weise im Blechpaket ange-ordnet sind, daß die Vorzugsrichtung der Blechschnitte eine Zufallsverteilung aufweisen.

4. Elektromotor nach Anspruch 1, dadurch gekennzeichnet, daß das Blechpaket in mehrere Teilpakete unterteilt ist, von denen ein jedes gegenüber dem anderen in Umfangsrich-tung um einen bestimmten Winkel verdreht angeordnet ist.

**Fig. 1**

**Fig. 2**

**Fig. 3**

K. Pfendler-2

## Europäisches Patentamt

# EUROPÄISCHER RECHERCHENBERICHT

EP 83 11 1581

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 663 851 (E.K. PERSSON) <br> * Gesamte Schrift * <br><br> --- | 1,2 | H 02 K 1/26 <br> H 02 K 23/04 |
| A | DE-C- 963 802 (WESTINGHOUSE ELECTRIC) <br> * Seite 1, Zeile 1 - Seite 2, Zeile 1 * <br><br> --- | 1,2 | |
| A | Patent Abstracts of Japan Band 5, Nr. 137, 29. August 1981 & JP-A-56-71442 <br><br> --- | | |
| A | Patent Abstracts of Japan Band 5, Nr. 171, 30. Oktober 1981 & JP-A-56-98363 <br><br> ----- | | |

**RECHERCHIERTE SACHGEBIETE (Int. Cl. 3)**

H 02 K 1/00
H 02 K 15/00
H 02 K 23/00

Der vorliegende Recherchenbericht wurde für alle Patentansprüche erstellt.

| Recherchenort <br> BERLIN | Abschlußdatum der Recherche <br> 13-02-1984 | Prüfer <br> GESSNER E A F |
|---|---|---|